# EUROPÄISCHE PATENTSCHRIFT

(11) **EP 2 272 718 B1**
(45) Veröffentlichungstag und Bekanntmachung des Hinweises auf die Patenterteilung: **04.12.2013**
(21) Anmeldenummer: 10167591.6
(22) Anmeldetag: 28.06.2010
(51) Int. Cl.: B60R 13/04

(54) **Säulenblende mit integrierter Fixierhilfe**
Pillar finisher with integrated attachment aid
Enjoliveur de pilier avec aide de fixation intégrée

(30) Priorität: 29.06.2009 DE 102009026070
(43) Veröffentlichungstag der Anmeldung: 12.01.2011
(73) Patentinhaber: DURA Automotive Body & Glass Systems GmbH, 58840 Plettenberg (DE)
(72) Erfinder: Gerndorf, Ralf, 57413, Finnentrop (DE); Schulze zur Wiesche, Jochen, 51143, Köln (DE); Bittner, Norfried, 58452, Witten (DE); Nüsken, Axel, 58762, Altena (DE); Schulte, Martin, 58802, Balve (DE)
(74) Vertreter: Tersteegen, Felix

(56) Entgegenhaltungen:
- EP-A2- 1 584 517
- JP-A- 7 052 726
- JP-A- 7 186 724
- JP-A- 8 300 953
- US-A- 5 820 198
- US-A- 5 964 496
- US-A1- 2004 006 923

## Beschreibung

Die Erfindung betrifft eine Säulenblende, die eingerichtet ist, um von Befestigungsmitteln mit einer Fahrzeugkarosserie verbunden zu werden, wobei die Befestigungsmittel dübelartige Fixierhilfen umfassen, die das Karosserieblech der Fahrzeugkarosserie im bestimmungsgemäßen Endeinbauzustand zumindest teilweise durchringen und im Bereich der Durchdringung zur Abstützung einer Haltekraft das Karosserieblech hintergreifen oder am Karosserieblech festklemmend anliegen, wobei die Fixierhilfen integraler Bestandteil der Säulenblende sind und von sich gegenüberliegenden Klemmflügeln gebildet sind, die ausgebildet sind, im bestimmungsgemäßen Endeinbauzustand ein Spreizelement zwischen sich aufzunehmen.

Säulenblenden sind im Kraftfahrzeugbau allgemein bekannt. Sie werden insbesondere dazu verwendet, um Karosseriespalte oder Funktionsteile im Tür- und Seitenfensterbereich sowie bestimmte Karosserieflächen im Bereich der Türen und Seitenfenster, die keine von außen erkennbaren Sichtflächen bilden sollen, zu verdecken. Außerdem dienen Sie dazu, Funktionsteile - beispielsweise Dichtungen - aufzunehmen und zu halten.

Es ist bekannt, die Säulenblenden mit der Fahrzeugkarosserie zu verschrauben, wobei für die Verschraubung dübelartige Fixierhilfen verwendet werden, die vor der eigentlichen Endmontage der Säulenblende in dafür vorgesehene Befestigungsöffnungen im Karosserieblech eingesetzt werden, um ein dauerhaftes und sicheres Halten der Schrauben zu gewährleisten. Eine solche Befestigung einer Säulenblende ist in der europäischen Offenlegungsschrift EP 1584 517 A2 gezeigt.

Nachteilig an dieser Art der Säulenblendenbefestigung sind allerdings die Anzahl der zu verwendenden Einzelteile und der damit verbundene Montageaufwand. Vor der Endmontage der Säulenblende ist zunächst in jede der in der Fahrzeugkarosserie hierfür vorgesehenen Befestigungsöffnungen eine dübelartige Fixierhilfen einzusetzen. Erst dann kann die Säulenblende an der Karosserie befestigt werden, wobei diese beim Befestigen durch die fehlende Vorausrichtung der Säulenblende zunächst vom Facharbeiter präzise in der richtigen Montageposition anzusetzen ist, um die Durchgangslöcher in der Säulenblende und die Befestigungsöffnungen in der Fahrzeugkarosserie in Deckung zu bringen.

Die Montagezeiten am Fließband sind zu einem wichtigen Kostenfaktor geworden, und jede auch noch so kleine Vereinfachung der Montage und jede noch so geringe Minimierung der Montagezeiten ist ein wichtiger Einflussfaktor bei einer Entscheidung für oder gegen die Einführung eines neuen Bauteils.

Im Hinblick auf logistische Aspekte kommt hinzu, dass für jedes Einzelteil weitere Zeichnungen angefertigt und Teilenummern eingerichtet und geführt werden müssen, dass die Montagebänder mit einer größeren Anzahl von Teilen zu beliefern sind und dass eine größere Anzahl von Ersatzteilen vorgehalten werden muss. Je größer die Anzahl der Teile, je größer ist der gesamtlogistische Aufwand und die damit verbundene Fehleranfälligkeit des Produktionsprozesses. Die Verringerung der Teileanzahl ist demnach auch ein Qualitätsfaktor.

Es ist zudem bekannt, Blenden oder Zierleisten mit andersartigen Befestigungsmitteln mit der Fahrzeugkarosserie zu verbinden. So offenbaren die US 5,964,496 und die JP 08-300 953 A Leistenbauteile, die mittels eines Spreizclips auf die Fahrzeugkarosserie aufgesteckt werden. Die JP 07-186 724 A offenbart ein Leistenbauteil, das durch eine Kombination von Schraub- und Clipsverbindung an der Fahrzeugkarosserie gehalten ist. Mit reinen Clipsverbdinungen können die erforderlichen Abzugskräfte jedoch oft nicht über den Betriebszeitraum erreicht werden, und eine zunehmend straffe Auslegung einer reinen Clipsverbindung zur Steigerung der Abzugskräfte kann die Montage erheblich erschweren, so dass grundsätzlich eine Verbindung mit einem zusätzlichen Spreizelement, über das die Haltekräfte in die Verbindung eingebracht werden, wünschenswert ist.

Aufgabe der Erfindung ist es, eine Säulenblende der eingangs beschriebenen Art derart zu gestalten, dass deren Montage möglichst schnell und unkompliziert zu bewerkstelligen ist. Gleichzeitig sollte die vom Facharbeiter am Band zu handhabende und die logistisch zu erfassende und zu dokumentierende Anzahl der benötigten Bauteile möglichst gering gehalten werden.

Diese Aufgabe wird nach der Erfindung dadurch gelöst, dass die Befestigungsmittel Spreizelemente umfassen, die an der Säulenblende vormontiert sind.

Die bezeichnete Lösung der Aufgabe gewährleistet es, dass die Säulenblende samt Fixierhilfen als ein einziges Bauteil vorliegt und demnach für den Monteur nur noch ein einziges Bauteil zu handhaben ist. Dadurch, dass die Positionierung der Fixierhilfen an der eigentlichen Säulenblende der Anordnung der Befestigungsöffnungen im Karosserieblech entspricht, kann die Säulenblende besonders schnell und einfach an der Karosserie angesetzt und sofort richtig positioniert werden.

Bevorzugt sind die Fixierhilfen werkstoffeinstückig mit der Säulenblende ausgeführt. Mit dem Begriff "werkstoffeinstückig" ist gemeint, dass die Fixierhilfen und die Säulenblende nicht nur eine zusammenhängende Baugruppe bilden, wie es auch im Rahmen einer Vormontage zweier Bauteile der Fall sein kann, sondern dass die Fixierhilfen einen integrierten, untrennbaren Bestandteil der Säulenblende bilden. Bevorzugt ist vorgesehen, dass die Fixierhilfen im gleichen Fertigungsschritt wie die Säulenblende, insbesondere im selben Spritzgussvorgang, und somit mit demselben Werkzeug an der Säulenblende angeformt werden oder an die Säulenblende angespritzt werden.

Der Vollständigkeit halber sei erwähnt, dass der Begriff "Fahrzeugblech" sich im Hinblick auf die Fahrzeugkarosserie selbstverständlich nicht nur auf Stahlwerkstoffe bezieht, sondern hiervon ebenso andere Werkstoffe erfasst sein sollen, die zur Herstellung einer Fahrzeugkarosserie grundsätzlich geeignet sind, beispielsweise Kunststoffe, faserverstärkte Kunststoffe und sonstige Verbundwerkstoffe.

Um sicherzustellen, dass die Säulenblende sicher und dauerhaft an der Fahrzeugkarosserie gehalten ist, sind die Fixierhilfen bevorzugt von sich gegenüberliegenden Klemmflügeln gebildet, die ausgebildet sind, im bestimmungsgemäßen Endeinbauzustand ein Spreizelement zwischen sich aufzunehmen. Das Spreizelement ist im einfachsten Fall eine Schraube, ein Niet oder ein Spreizdorn. Dabei bedeutet der Begriff Spreizelement nicht zwingend, dass es die Klemmflügel derart auseinander spreizt, dass sich deren Enden voneinander weg bewegen. Entscheidend ist vielmehr, dass die Spreizelemente im bestimmungsgemäßen Endeinbauzustand ein Nach-innen-Biegen der Klemmflügel sicher verhindern. Außerdem sollen sie eine ausreichende Klemmkraft sicherstellen. Allerdings können selbstverständlich auch Spreizelemente vorgesehen werden, die beim Einführen zwischen die Klemmflügel diese derart auseinander treiben, dass die Fixierhilfen verformt und mit dem Karosserieblech im Bereich der Befestigungsöffnungen verquetscht werden.

Um die Fixierhilfen besser in die Befestigungsöffnungen einführen zu können, ist bevorzugt vorgesehen, dass die von den Klemmflügeln gebildete wirksame Außenkontur der Fixierhilfe sich ausgehend von dem der Innenseite der Säulenblende abgewandten Ende der Fixierhilfe zunächst erweitert. Die Fixierhilfe zentriert sich damit beim Ansetzen an die Karosserie weitgehend selbst, der Einfädelvorgang geht schneller und unproblematischer vonstatten.

In einer weiteren bevorzugten Ausgestaltung kann vorgesehen sein, dass an den Klemmflügeln der Fixierhilfe ein im bestimmungsgemäßen Endeinbauzustand die Fahrzeugkarosserie formschlüssig hintergreifender Haltevorsprung ausgebildet ist. Diese Ausgestaltung sorgt für einen besonders sicheren Halt der Säulenblende an der Karosserie, da selbst bei geringer Klemmkraft der Formschluss eine Befestigung gewährleistet, die bei Verwendung geeigneter Spreizelemente nicht zerstörungsfrei zu lösen ist.

Um die Montage für den Produktionsfacharbeiter noch einfacher zu gestalten, kann vorgesehen sein, dass die Befestigungsmittel Spreizelemente umfassen, die nach dem Aufsetzen der Säulenblende auf die Fahrzeugkarosserie ein Nach-innen-Umbiegen der Klemmflügel zu unterbinden vermögen, wobei die Spreizelemente an der Säulenblende vormontiert sind. Dabei sollten die Spreizelemente selbstverständlich im vormontierten Zustand nur derart weit in die Fixierhilfe hineinragen, dass sie (noch) nicht zwischen die Klemmflügel ragen, um die Montage der Säulenblende nicht zu behindern. Die Vormontage der Spreizelement führt in allererster Linie dazu, dass der Monteur die Spreizelemente nicht gesondert greifen und ansetzen muss, sondern lediglich nach dem Aufsetzen der Säulenblende unter Zuhilfenahme eines entsprechenden Werkzeugs in die Endeinbaulage zu überführen hat. Auch dies führt zu einer Verkürzung der Montagezeiten.

Als besonderes vorteilhaft wird angesehen, wenn die die Klemmflügel derart ausgebildet sind, dass sie beim Aufsetzen der Säulenblende auf die Kraftfahrzeugkarosserie rückfedernd einbiegen. Das hiermit verbundene, clipartige Einrasten in Ihre Endeinbaulage signalisiert dem Monteur den richtigen Sitz der Säulenblende an der Karosserie. Fehlt ein solches Einrasten, wird der Monteur sich des richtigen Sitzes der Säulenblende an der Karosserie vergewissern, um eine Fehlmontage auszuschließen. Durch die hiermit erreichte Qualitätssicherung scheiden fehlerhaft vorgenommene Montagen praktisch aus. Es kann aber auch vorgesehen sein, dass die Klemmflügel zur Vereinfachung des Einführens in Befestigungsöffnungen einander zugeneigt sind und erst das Einführen eines Spreizelementes die Klemmflügel in ihre Endeinbaulage drängt und dabei mit dem Karosserieblech verquetscht.

Bevorzugt sind - insbesondere im Bereich der Fixierhilfen - elastische Zwischenelemente vorgesehen, die im bestimmungsgemäßen Endeinbauzustand zwischen den aneinander anliegenden oder sich unmittelbar gegenüber liegenden Oberflächen der Säulenblende und der Fahrzeugkarosserie angeordnet sind. Diese können, je nach Materialbeschaffenheit, sowohl als Dichtung dienen, die das Eindringen von Feuchtigkeit durch die Befestigungsöffnungen in die Fahrzeugkarosserie hinein verhindern, als auch einen Toleranzausgleich ausbilden, der die Bauteile gegeneinander vorspannt und einem allmählichen Nachlassen der Verbindungskräfte zwischen Säulenblende und Fahrzeugkarosserie, das im Laufe der Betriebszeit aufgrund von andauernden Vibrationen und sonstigen Belastungen eintreten kann, entgegenwirkt. So wird die Dichtheit der Karosserieholme nach Außen gewährleistet und ein im Laufe der Betriebszeit auftretendes Klappern der Säulenblende verhindert. Die elastischen Zwischenelemente sind bevorzugt an der Säulenblende vormontiert.

Um sowohl den optischen Ansprüchen an die Säulenblende, die naturgemäß eine nach außen gerichtete Sichtfläche aufweist, die das Erscheinungsbild eines Fahrzeugs nicht unerheblich mitprägt, als auch den mechanisch funktionalen Anforderungen an das Material der Säulenblende im Hinblick auf deren Verbindung mit der Karosserie gerecht zu werden, kann vorgesehen sein, dass die Säulenblende zur Bildung der äußeren Sichtfläche außenseitig von einem Sichtkunststoff mit ersten Materialeigenschaften und innenseitig von einem Funktionskunststoff mit zweiten, von den ersten Materialeigenschaften unterschiedlichen Materialeigenschaften gebildet ist, wobei insbesondere der die Fixierhilfen bildende Bereich der Säulenblende von dem Funktionskunststoff gebildet ist.

Hintergrund dieser Überlegung ist, dass die optisch prägende Außenseite bevorzugt von einem sehr widerstandsfähigen, wetter- und UV beständigen sowie kratzfesten Sichtkunststoff gebildet sein soll, der insbesondere auch Glas- oder Metallflächen imitieren soll. Kunststoffe mit diesen Eigenschaften sind jedoch spröde und brechen daher bei den Biege-, Torsions- und Quetschbeanspruchungen, die eine Säulenblendenmontage, insbesondere die Einführung eines Spreizelementes, mit sich bringen, regelmäßig. Auch ist das Einführen der Spreizelemente schwieriger zu bewerkstelligen, da hierfür größere Kräfte aufzuwenden sind. Daher wird der der Fahrzeugkarosserie zugewandte Materialbereich der Säulenblende, an dem die Funktionsbauteile, zum Beispiel die Fixierhilfen, ausgebildet sind, bevorzugt von einem Funktionswerkstoff gebildet, der die Eigenschaften aufweist, die für die sichere und dauerhafte Befestigung der Säulenblende vonnöten sind. Hierbei ist insbesondere an weichere, zähe und in den benötigten Grenzen verformbare Kunststoffe zu denken.

Die Fertigung einer solchen mehrschichtigen Säulenblende erfolgt bevorzugt in einem Mehrkomponenten-Spritzgießverfahren, bei dem nach dem Spritzen der ersten Schicht durch Ziehen eines Werkzeugkerns oder durch das Freimachen eines weiteren Werkzeugvolumens der zweite Werkstoff nachgespritzt wird und sich fest an den ersten Werkstoff anschmiegt und sich fest mit diesem verbindet.

Weitere Merkmale und Vorteile der Erfindung ergeben sich aus den Unteransprüchen und aus der nachfolgenden Beschreibung bevorzugter Ausführungsbeispiele anhand der Zeichnungen.

In den Zeichnungen zeigt:
Figur 1 eine dreidimensionale Gesamtansicht einer Säulenblende mit daran angeordneten Fixierhilfen,
Figur 2a eine Detailansicht des Bereichs der Säulenblende aus Figur 1, an dem die Fixierhilfe ausgebildet ist,
Figur 2b die Detailansicht aus Fig. 2a mit eingesetztem Spreizelement,
Figur 3 eine Darstellung der Säulenblende im Schnitt mit eingeführtem Spreizelement und zusätzlich gehaltenen Funktionsteilen, und
Figuren 4a bis 4c eine schematische Darstellung des Aufsetzens und Befestigens einer Säulenblende auf die Fahrzeugkarosserie im Rahmen der Montage.

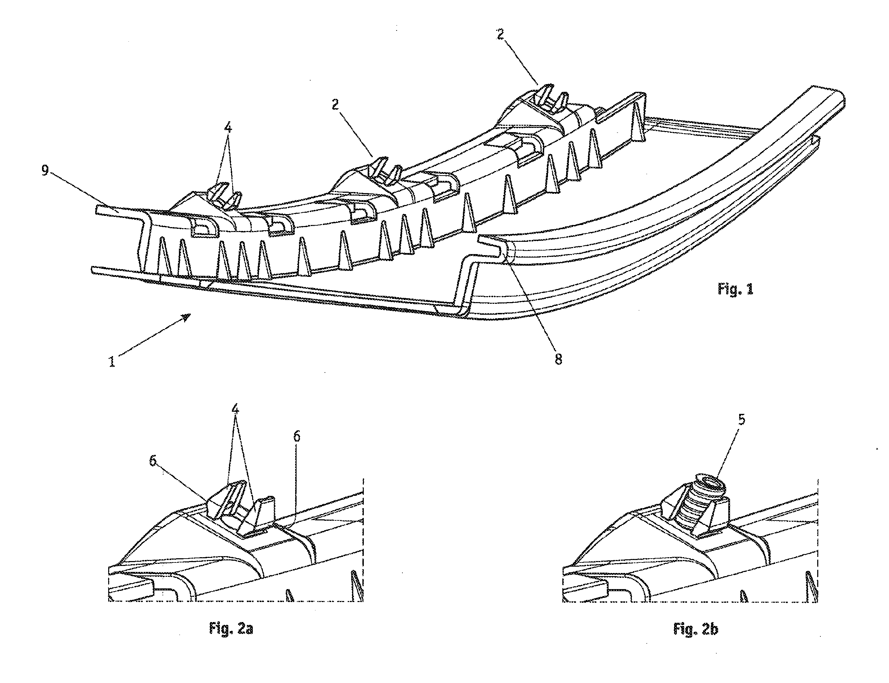

In Figur 1 ist eine Säulenblende 1 in einer perspektivischen Gesamtansicht dargestellt, die insbesondere die Innenseite der Säulenblende zeigt. Es handelt sich bei der in Figur 1 dargestellten Säulenblende um ein im Spritzgießverfahren hergestelltes Kunststoffbauteil.

Eine erste Seitenkante der Säulenblende 1 weist im Endbereich einen um etwa 90° abgewinkelten, U-förmig ausgebildeten Haltesteg 8 auf, der im eingebauten Zustand das die Außenkante eines Seitenholms bildende Karosserieblech einer Fahrzeugkarosserie hintergreift. Auf der gegenüberliegenden, zweiten Seitenkante ist ein Fixiersteg 9 ausgebildet, der dazu bestimmt ist, mit Befestigungsmitteln an der Fahrzeugkarosserie befestigt zu werden. An dem Fixiersteg 9 sind in Abständen zueinander Fixierpunkte ausgebildet, an denen Fixierhilfen 2 in der Form eines Befestigungsclips vorgesehen sind, die einen integralen Bestandteil der Säulenblende 1 bilden.

Die Fixierhilfen 2 weisen dübelartige Fortsätze in Form von zwei Klemmflügeln 4 auf, deren einander zugewandte Innenflächen weitestgehend parallel verlaufen, während die Außenflächen sich ausgehend von dem der Innenfläche der Säulenblende 1 abgewandten Ende zunächst keilförmig erweitern, um sich nach etwa zwei Dritteln der Klemmflügellänge wieder zu verjüngen. Die Innenseiten der Klemmflügel 4 bilden außerdem Vertiefungen aus, die der Mantelfläche eines gedachten, zwischen den Klemmflügeln befindlichen Zylinders folgen und die, wie insbesondere die Detailzeichnung der Figur 2a und 2b verdeutlichen, die Aufnahme eines Spreizelements 5 vereinfachen und dessen in das Material der Klemmflügel 4 einschneidendem Gewinde eine größere Angriffsfläche bieten.

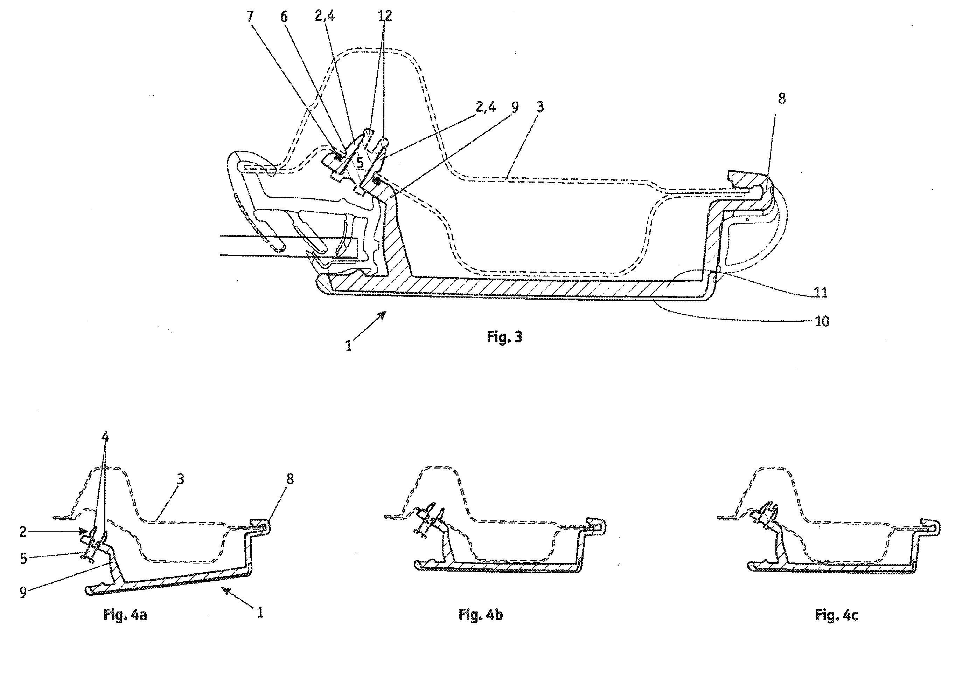

Die Fixierhilfen 2 durchdringen im montierten Zustand das Karosserieblech und ragen in den Seitenholm der Karosserie hinein, wie in Figur 3 im Detail zu sehen ist. Figur 3 und Figur 2b verdeutlichen, dass trotz der an den Klemmflügeln 4 vorgesehenen äußeren Keilflächen bei eingesetztem Spreizelement keine Möglichkeit besteht, dass die Keilflächen nach innen umbiegen, so dass eine sicherer Halt am Karosserieholm gewährleistet ist und ein Abnehmen der Säulenblende 1 vom Karosserieholm nicht möglich ist.

In Figur 3 ist zu erkennen, dass die Fixierhilfe 2 werkstoffeinstückig mit der Säulenblende 1 verbunden ist. Der die Fixierhilfe 2 im Spritzgussprozess ausbildende Werkzeughohlraum ist im selben Spritzgusswerkzeug ausgeformt, mit dem auch die Säulenblende 1 erstellt wird.

Die in Figur 3 dargestellte Säulenblende 1 ist zudem mehrschichtig aufgebaut. Außenseitig, also an der vom Fahrzeug wegweisenden Oberfläche, ist die Säulenblende 1 von einer Sichtkunststoffschicht 10 gebildet. Diese bildet die im montierten Zustand den optischen Eindruck prägende Oberfläche, die aus ästhetischen Gesichtspunkten über die gesamte Lebensdauer des Fahrzeugs einen möglichst hochwertigen Eindruck machen soll und daher aus eher harten, kratzfesten Kunststoffen hergestellt ist. Die innere Schicht der Säulenblende 1, die zum Fahrzeugholm hin weist und im montierten Zustand der Säulenblende von außen nicht erkennbar ist, ist von einer Funktionskunststoffschicht 11 gebildet. Der für diese Schicht verwendete Kunststoff erfordert Materialeigenschaften, die sich mit den für die Sichtkunststoffschicht benötigten nicht gut vereinbaren lassen. Daher ist die Funktionskunststoffschicht 11 mit einem Kunststoff hergestellt, der eher duktile bzw. zähelastische Eigenschaften aufweist. Wie aus Figur 3 erkennbar sind die Fixierhilfen Bestandteil der Funktionskunststoffschicht. Sie werden bevorzugt im gleichen Spritzgussvorgang ausgeformt und erkalten als Teil der Funktionskunststoffschicht gemeinsam mit dieser.

Figuren 4a bis 4c zeigen schematisch, wie die Säulenblende 1 auf den Fahrzeugholm aufgesetzt wird. Zunächst wird die Säulenblende 1 mit dem Haltesteg 8 derart auf die Karosserie aufgesetzt, dass der Haltesteg 8 die Außenkante des Holms umgreift (Figur 4a). Anschließend wird die Säulenblende 1 um etwa 10° in Richtung des Karosserieholms geschwenkt und die Fixierhilfen 4 werden mit den Befestigungsöffnungen im Karosserieholm in Deckung gebracht (Figur 4b). Hierzu ist die Säulenblende 1 in dieser Position nach wie vor in gewissen Grenzen in einer vertikalen Richtung verschieblich. Einmal in der richtigen Position muss die Säulenblende nur noch durch leichtes Drücken auf den Karosserieholm aufgeclipst werden. Die hierzu erforderliche Kraft sollte durch eine entsprechende Dimensionierung der Fixierhilfen und eine angepasste Materialauswahl gering genug sein, um auf Dauer nicht zu erschöpfen oder eine mit hohen, möglicherweise Material schädigenden Kräften verbundene Handhabung erforderlich zu machen. Gleichzeitig sollte der Montagewiderstand ausreichend hoch sein, um dessen Überwindung dem montierenden Arbeiter durch Einrasten der Fixierhilfen anzeigen zu können. Im Anschluss an das Einrasten der Fixierhilfen kann die Säulenblende 1 durch das Einführen der Spreizelemente endgültig fixiert werden (Figur 4c).

Die Vorteile der Ausgestaltung der Säulenblende 1 werden anhand der Figuren 4a bis 4c besonders deutlich. Der montierende Facharbeiter muss nur ein einziges Teil handhaben. Das üblicherweise vor dem Montageschritt von Figur 4a vorzunehmende Einsetzen separater Fixierhilfen 2 in die dafür vorgesehenen Befestigungsöffnungen im Karosserieblech 3 entfällt vollständig. Nach dem Einschwenken der Fixierhilfe 2 in die in Figur 4b gezeigte Position ist die vertikale Ausrichtung der Säulenblende 1 denkbar einfach zu bewerkstelligen, da die Fixierhilfen 2, einmal in der richtigen Position, aufgrund ihres sich keilförmig zuspitzenden Endes geringfügig in die Befestigungsöffnungen einsinken, so dass schon vor dem eigentlichen Einclipsen der Säulenblende 1 auf die Karosserie die richtige Positionierung für den Monteur erkennbar ist. Ein weiterer Vorteil ist, dass der Monteur nach dem Einrasten der Fixierhilfen 2 die Säulenblende 1 nicht weiter festhalten muss, so dass er beide Hände für die weiteren Montageschritte frei hat. Er muss beim Einführen der Spreizelemente 5 die Säulenblende also nicht festhalten.

Erwähnenswert ist insbesondere auch, dass das die Spreizelemente 5, wie Figur 4a und Figur 4b verdeutlichen, schon an der Säulenblende 1 vormontiert sind. Auch dies vereinfacht und beschleunigt den Montagevorgang erheblich, da die Spreizelemente 5 nicht separat vom Monteur zu handhaben sind. Die Spreizelemente 5 weisen zur Fixierung an der Säulenblende 1 an dem beim Einführen in die Fixierhilfen 2 vorausgehenden Ende rückfedernd wirkende Klemmbacken 12 auf, die das Spreizelement 5, obwohl es noch nicht vollständig zwischen die Klemmflügel 4 der Fixierhilfe 2 eingeführt ist, bis zur Endmontage sicher in Position halten. Die vormontierten Spreizelemente 5 ragen dabei nur soweit in die Fixierhilfe 2 hinein, dass die zum einfachen aber fühlbaren Einrasten der Fixierhilfe 2 erforderliche Elastizität der Klemmflügel 4 nicht beeinträchtigt ist. Das hierfür erforderliche leichte Umbiegen der Klemmflügel 4 nach innen wird durch die Spreizelemente 5 also nicht behindert.

Nach dem Eindrücken der Spreizelemente 5 zwischen die Klemmbacken 4 umgreifen die überstehenden, äußeren Ränder der Klemmbacken 12, die wulstartig nach außen ragen, rückfedernd die Enden der Klemmflügel 4 der Fixierhilfe 2, was zusätzlichen Halt für die Spreizelemente 5 gewährleistet. Die Spreizelemente 5 rasten so für den Monteur spürbar in ihrer Endposition ein, was diesem deren richtigen Sitz signalisiert. Insbesondere kann auf diese Weise gewährleistet werden, dass das einfache axiale Eindrücken der Spreizelemente 5 zwischen die Klemmflügel 4 zur Endfixierung der Säulenblende 1 an der Karosserie ausreichend ist. Auf das bei Schrauben erforderliche Drehen des Spreizelements 5 kann verzichtet werden, was nicht nur eine schnellere und einfachere Montage garantiert, sondern auch den Einsatz einfacher Handwerkzeuge ermöglicht. Die Spreizelemente 5 sind bevorzugt aus einem Kunststoff gefertigt.

### Bezuqszeichenliste

- 1: Säulenblende
- 2: Fixierhilfe
- 3: Karosserieblech
- 4: Klemmflügel
- 5: Spreizelement
- 6: Haltevorsprung
- 7: elastisches Zwischenelement
- 8: Haltesteg
- 9: Fixiersteg
- 10: Sichtkunststoffschicht
- 11: Funktionskunststoffschicht
- 12: Klemmbacken

## Patentansprüche

1. Säulenblende (1), eingerichtet um von Befestigungsmitteln mit einer Fahrzeugkarosserie verbunden zu werden, wobei die Befestigungsmittel zumindest eine dübelartige Fixierhilfe (2) umfassen, die das Karosserieblech (3) der Fahrzeugkarosserie im bestimmungsgemäßen Endeinbauzustand zumindest teilweise durchdringen und im Bereich der Durchdringung zur Abstützung einer Haltekraft das Karosserieblech (2) hintergreifen oder am Karosserieblech (2) festklemmend anliegen, wobei die Fixierhilfen (2) integraler Bestandteil der Säulenblende (1) sind und von sich gegenüberliegenden Klemmflügeln (4) gebildet sind, die ausgebildet sind, im bestimmungsgemäßen Endeinbauzustand ein Spreizelement (5) zwischen sich aufzunehmen,
**dadurch gekennzeichnet, dass**
die Befestigungsmittel Spreizelemente (5) umfassen, die an der Säulenblende (1) vormontiert sind.

2. Säulenblende nach einem der vorhergehenden Ansprüche, **dadurch gekennzeichnet, dass** die Fixierhilfen werkstoffeinstückig mit der Säulenblende (1) ausgeführt sind.

3. Säulenblende nach einem der beiden vorhergehenden Ansprüche, **dadurch gekennzeichnet, dass** die wirksame Außenkontur der Fixierhilfe (2) sich ausgehend von dem der Innenseite der Säulenblende (1) abgewandten Ende zunächst erweitert.

4. Säulenblende nach einem der vorhergehenden Ansprüche, **dadurch gekennzeichnet, dass** an den Klemmflügeln (4) des Fixierhilfe (5) ein im bestimmungsgemäßen Endeinbauzustand die Fahrzeugkarosserie formschlüssig hintergreifender Haltevorsprung (6) ausgebildet ist.

5. Säulenblende nach einem der vorhergehenden Ansprüche, **dadurch gekennzeichnet, dass** die Klemmflügel (4) derart ausgebildet sind, dass sie beim Eindrücken in die in der Fahrzeugkarosserie vorgesehenen Befestigungsöffnungen rückfedernd einbiegen.

6. Säulenblende nach einem der vorhergehenden Ansprüche, **dadurch gekennzeichnet, dass** die Klemmflügel (4) zur Vereinfachung des Einführens in Befestigungsöffnungen einander zugeneigt sind und erst das Einführen eines Spreizelementes (5) die Klemmflügel (4) in ihre Endeinbaulage drängt.

7. Säulenblende nach einem der vorhergehenden Ansprüche, **dadurch gekennzeichnet, dass** im Bereich der Fixierhilfen (2) und zwischen den sich gegenüber liegenden Oberflächen der Säulenblende (1) und der Fahrzeugkarosserie elastische Zwischenelemente (7) vorgesehen sind.

8. Säulenblende nach einem der vorhergehenden Ansprüche, **dadurch gekennzeichnet, dass** die Säulenblende zur Bildung der äußeren Sichtfläche außenseitig von einem Sichtkunststoff mit ersten Materialeigenschaften und innenseitig von einem Funktionskunststoff mit zweiten, von den ersten Materialeigenschaften unterschiedlichen Materialeigenschaften gebildet ist.

## Claims

1. A pillar finisher (1), arranged in order to be connected with a vehicle body by fastening means, wherein the fastening means comprise at least one dowel-like fixing aid (2), which at least partially penetrate the body sheet (3) of the vehicle body in the intended final installed state, and in the region of the penetration, to support a holding force, engage behind the body sheet (2) or lie in a clamping manner against the body sheet (2), wherein the fixing aids (2) are an integral component of the pillar finisher (1) and are formed by clamping wings (4) lying opposite one another, which are constructed to receive a spreading element (5) between them in the intended final installed state,
**characterized in that**
the fastening means comprise spreading elements (5) which are premounted on the pillar finisher (1).

2. The pillar finisher according to one of the preceding claims, **characterized in that** the fixing aids are embodied so as to be materially in one piece with the pillar finisher (1).

3. The pillar finisher according to one of the two preceding claims, **characterized in that** the effective outer contour of the fixing aid (2) widens initially, starting from the end facing away from the inner side of the pillar finisher (1).

4. The pillar finisher according to one of the preceding claims, **characterized in that** a holding projection (6), engaging in a form-fitting manner behind the vehicle body in the intended final installed state, is constructed on the clamping wings (4) of the fixing aid (5).

5. The pillar finisher according to one of the preceding claims, **characterized in that** the clamping wings (4) are constructed such that they bend in a resilient manner on pressing into the fastening openings provided in the vehicle body.

6. The pillar finisher according to one of the preceding claims, **characterized in that** the clamping wings (4) are inclined towards each other to simplify the introduction into fastening openings, and only the introduction of a spreading element (5) urges the clamping wings (4) into their final installed position.

7. The pillar finisher according to one of the preceding claims, **characterized in that** elastic intermediate elements (7) are provided in the region of the fixing aids (2) and between the surfaces of the pillar finisher (1) and of the vehicle body lying opposite each other.

8. The pillar finisher according to one of the preceding claims, **characterized in that** to form the outer exposed surface, the pillar finisher is formed on the outer side by an exposed plastic having first material characteristics and on the inner side by a functional plastic having second material characteristics which are different from the first material characteristics.

## Revendications

1. Panneau de pilier (1), conçu afin d'être relié par des moyens de fixation à une carrosserie de véhicule, dans lequel les moyens de fixation comprennent au moins un auxiliaire de fixation (2) de type goujon, qui pénètrent la tôle de carrosserie (3) de la carrosserie de véhicule au moins partiellement dans l'état de montage final conforme à l'usage et viennent en prise par l'arrière avec la tôle de carrosserie (2) au niveau de la pénétration afin d'appuyer une force de retenue ou viennent reposer sur la tôle de carrosserie (2) avec serrage, dans lequel les auxiliaires de fixation (2) sont conçus en un seul tenant avec le panneau de pilier (1) et sont formés par des ailettes de serrage (4) en vis-à-vis, qui sont conçues afin de renfermer entre elles un élément d'écartement (5) en l'état de montage final conforme à l'usage, **caractérisé en ce que** les moyens de fixation comprennent des éléments d'écartement, qui sont prémontrés sur le panneau de pilier.

2. Panneau de pilier selon une des revendications précédentes, **caractérisé en ce que** les auxiliaires de montage sont conçus en un seul tenant par complémentarité de matière avec le panneau de pilier (1).

3. Panneau de pilier selon une des deux revendications précédentes, **caractérisé en ce que** le contour extérieur efficace des auxiliaires de fixation (2) s'élargit à partir de l'extrémité qui se détourne du côté intérieur du panneau de pilier (1).

4. Panneau de pilier selon une des revendications précédentes, **caractérisé en ce que** sur les ailettes de serrage (4) de l'auxiliaire de fixation (5), une protubérance de retenue (6) venant en prise par l'arrière avec la carrosserie de véhicule par conjonction de forme en l'état de montage final conforme à l'usage est réalisée.

5. Panneau de pilier selon une des revendications précédentes, **caractérisé en ce que** les ailettes de serrage (4) sont conçues de telle sorte qu'elle se recourbent par rappel élastique à l'intérieur des ouvertures de fixation prévues dans la carrosserie du véhicule lors du pressage.

6. Panneau de pilier selon une des revendications précédentes, **caractérisé en ce que** les ailettes de serrage (4) sont inclinées l'une vers l'autre afin de faciliter l'insertion dans les ouvertures de fixation et seule l'insertion d'un élément d'écartement (5) refoule les ailettes de serrage (4) dans la position de montage final.

7. Panneau de pilier selon une des revendications précédentes, **caractérisé en ce que** au niveau des auxiliaires de fixation (2) et entre les surfaces se trouvant en vis-à-vis des panneaux de pilier (1) et de la carrosserie de véhicule, des éléments intermédiaires (7) élastiques sont prévus.

8. Panneau de pilier selon une des revendications précédentes, **caractérisé en ce que** le panneau de pilier afin de former la surface de visualisation externe est formé du côté extérieur par un plastique de visualisation avec des premières propriétés de matériau et du côté intérieur par un plastique fonctionnel avec des deuxièmes propriétés de matériau, différentes des premières propriétés de matériau.
